# FASCICULE DE BREVET EUROPEEN

(11) **EP 1 301 733 B1**
(45) Date de publication et mention de la délivrance du brevet: **31.05.2006**
(21) Numéro de dépôt: 01955426.0
(22) Date de dépôt: 16.07.2001
(51) Int. Cl.: F16F 9/58, B60G 11/52, B60G 15/06

(54) **DISPOSITIF DE LIMITATION DE COURSE POUR AMORTISSEUR DE VEHICULE AUTOMOBILE, ET PROCEDE DE FABRICATION D'UN TEL DISPOSITIF**
HUBBEGRENZUNG FÜR EINEN STOSSDÄMPFER EINES KRAFTFAHRZEUGES UND HERSTELLVERFAHREN DAFÜR
TRAVEL LIMIT STOP DEVICE FOR A MOTOR VEHICLE DAMPER, AND METHOD FOR MAKING SAME

(30) Priorité: 17.07.2000 FR 0009320; 17.07.2000 FR 0009321
(43) Date de publication de la demande: 16.04.2003
(73) Titulaire: Peugeot Citroen Automobiles SA, 92200 Neuilly sur Seine (FR)
(72) Inventeur: MENNESSON, Dominique, F-94700 Maisons-Alfort (FR)
(74) Mandataire: Thinat, Michel
(86) Numéro de dépôt international: PCT/FR2001/002309
(87) Numéro de publication internationale: WO 2002/006699

(56) Documents cités:
- EP-A- 0 429 405
- DE-A- 3 619 942
- DE-A- 19 803 174
- FR-A- 2 637 232
- FR-A- 2 658 129
- US-A- 3 165 306
- US-A- 4 747 587

## Description

La présente invention concerne un dispositif de limitation de course pour véhicule automobile, ainsi qu'un procédé de fabrication d'un tel dispositif.

Une suspension de véhicule automobile est généralement constituée d'un ressort de suspension servant à soutenir la masse suspendue du véhicule, d'un amortisseur pour amortir les déplacements relatifs entre la masse suspendue et la masse non suspendue du véhicule, et de deux butées comportant classiquement un élément élastique de compression associé à l'amortisseur pour limiter l'amplitude des déplacements relatifs entre la masse suspendue et la masse non suspendue, aussi bien en compression qu'en détente.

Dans le cas d'une suspension selon laquelle la tige de l'amortisseur est liée au châssis du véhicule, tandis que le cylindre constituant le corps de l'amortisseur est lié à un support de la fusée de roue, qui peut être constitué par un bras de suspension, la butée est interposée entre le châssis du véhicule et le corps de l'amortisseur, en étant comprimée, le long de la tige de l'amortisseur, coaxialement à celle-ci, entre une paroi transversale d'appui solidaire du corps de l'amortisseur, à l'extrémité supérieure de celui-ci, et un bol d'expansion lié à la fixation de la tige d'amortisseur à la caisse du véhicule.

Selon cet agencement connu, la butée intervient directement dans l'empilage de l'amortisseur en augmentant ses cotes mortes de la valeur de longueur de la butée complètement comprimée additionnée de l'épaisseur de la paroi d'appui de la butée. Cette paroi d'appui doit en outre comporter des canaux d'évacuation d'air expulsé par la compression de la butée pour empêcher l'entrée sous pression d'air ou de particules étrangères dans l'amortisseur à travers les moyens d'étanchéité de la tige relativement au cylindre de l'amortisseur.

US-A-3 165 306 décrit un dispositif de limitation de course pour amortisseur de véhicule automobile comprenant les caractéristiques techniques du préambule de la revendication 1.

Selon ce dispositif connu, l'élément de filtration en élastomère constitué de deux pièces supérieure et inférieure est situé au-dessus et en dehors du ressort de suspension, contribuant à une augmentation de la longueur totale de l'amortisseur.

La présente invention a pour but de pallier les inconvénients ci-dessus en proposant un dispositif de limitation de course pour amortisseur de véhicule automobile qui est agencé de façon que la butée de compression ne fasse plus partie des cotes mortes de l'amortisseur, d'où une amélioration substantielle de la capacité du train avant ou arrière du véhicule comportant un tel dispositif, dans lequel les risques d'accumulation de particules entre la butée, la tige et le corps de l'amortisseur sont considérablement réduits, et qui permet de le rendre le plus compact possible suivant la longueur totale de l'amortisseur.

L'invention a donc pour objet un dispositif de limitation de course pour amortisseur de véhicule automobile comprenant les caractéristiques techniques énoncées dans la revendication 1.

De préférence, l'extrémité de la tige de l'amortisseur est également située dans l'enveloppe du ressort de suspension.

Selon un premier mode de réalisation, la butée de compression est disposée autour du corps de l'amortisseur dans un bol solidaire de ce corps et est maintenue précontrainte dans le bol par une coupelle liée au châssis ou au support de roue.

De préférence, le bol de logement de la butée de compression comprend deux parois concentriques respectivement externe et interne raccordées l'une à l'autre par une paroi annulaire transversale d'appui de la butée de compression, de façon à définir approximativement, en section longitudinale, la forme d'un U, la paroi interne du bol étant solidaire de la surface latérale correspondante du corps de l'amortisseur.

Dans le cas où la butée de compression est interposée entre le châssis du véhicule et le corps de l'amortisseur, la coupelle de précontrainte de la butée est solidaire d'un support de suspension fixé à la caisse, le support de suspension étant l'appui d'une extrémité d'un ressort de suspension dont l'extrémité opposée prend appui sur une collerette solidaire du corps de l'amortisseur.

L'extrémité active de la butée en appui sur la coupelle a une forme annulaire se prolongeant en biseau.

Selon un second mode de réalisation, l'élément de compression est monté sur un support lié au châssis du véhicule, la butée étant maintenue précontrainte sur le support par un élément d'appui lié au corps ou à la tige de l'amortisseur.

Le dispositif de limitation de course selon l'invention peut également comporter une ou plusieurs des caractéristiques suivantes, prises isolément, ou selon toutes les combinaisons techniquement possibles :
- l'élément de compression est pourvu d'une extrémité en appui sur ledit élément d'appui et d'une extrémité opposée montée par complémentarité de forme sur une jupe fixée sur une cuvette de réception de l'extrémité du ressort de suspension de l'amortisseur, dont l'extrémité opposée prend appui sur une collerette solidaire du corps ou de la tige ;
- l'élément de compression est pourvu d'un bourrelet périphérique en saillie de façon radialement externe qui s'engage dans une gorge complémentaire ménagée dans la paroi de la jupe ;
- l'élément de compression comporte une partie généralement cylindrique dont une extrémité est en appui sur ledit élément d'appui et dont l'extrémité opposée se prolonge par une partie évasée dont l'extrémité libre délimite un épaulement sensiblement annulaire qui se monte dans une cuvette de réception de l'extrémité du ressort de suspension de l'amortisseur dont l'autre extrémité prend appui sur une collerette solidaire du corps ou de la tige ;
- ledit élément d'appui comporte deux épaulements annulaires d'extrémité mutuellement opposés, l'un en appui sur la collerette et l'autre recevant l'élément de compression, et une partie médiane formant entretoise ;

L'invention a également pour objet un procédé de fabrication d'un dispositif de limitation de course tel que défini dans le second mode de réalisation ci-dessus, caractérisé en ce qu'il comporte les étapes consistant à mouler l'élément de compression, monter le support sur l'élément de compression, et réaliser une bloc de filtration de vibrations par lequel l'élément de compression vient se monter sur la tige de l'amortisseur, et en ce que l'on réalise simultanément l'élément de compression et le bloc de filtration par moulage, une bague de montage de l'élément de compression étant rendue solidaire de l'élément de compression au cours du moulage.

L'invention sera mieux comprise, et d'autres buts, caractéristiques, détails et avantages de celle-ci apparaîtront plus clairement au cours de la description explicative qui va suite faite en référence aux dessins annexés donnés uniquement à titre d'exemple illustrant trois modes de réalisation de l'invention et dans lesquels :
- la figure 1 représente suivant une vue partielle en coupe longitudinale, un dispositif à butée de limitation de course pour amortisseur de véhicule automobile, suivant un premier mode de réalisation de l'invention ;
- la figure 2 est une vue partielle en coupe longitudinale d'un dispositif de limitation de course suivant un second mode de réalisation de l'invention pour amortisseur de véhicule automobile ; et
- la figure 3 est une vue partielle en coupe longitudinale d'un autre mode de réalisation d'un dispositif de limitation de course pour véhicule automobile selon l'invention.

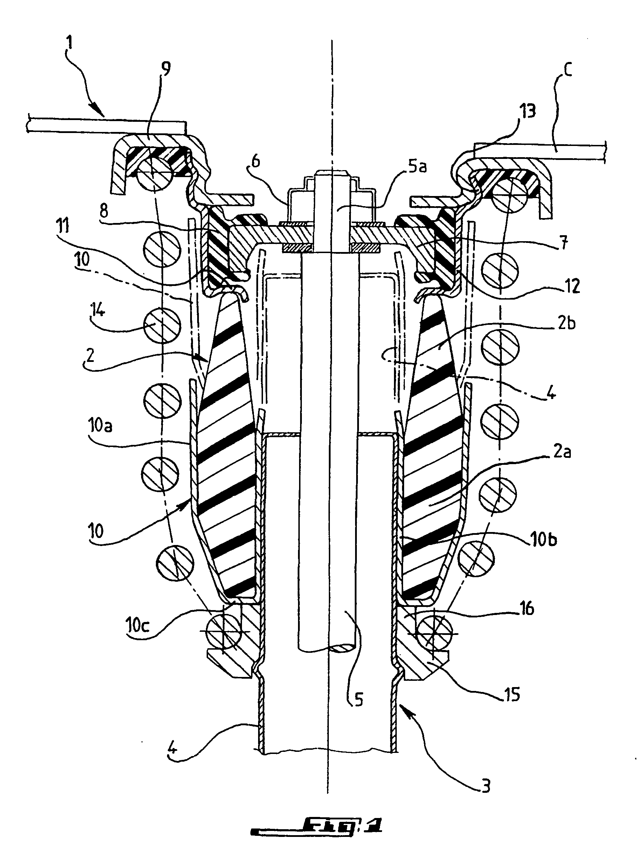

La figure 1 représente le dispositif 1 à butée 2 de limitation de course selon un premier mode de réalisation de l'invention.

Le dispositif 1 est prévu pour un amortisseur 3 du véhicule automobile comprenant un corps cylindrique d'amortisseur 4 et une tige d'amortisseur 5 montée coulissante dans le corps d'amortisseur 4.

Le mode de réalisation représenté à la figure 1 concerne le cas où le corps d'amortisseur 4 est lié à sa partie inférieure (non représentée) au support de la fusée de roue et la tige d'amortissement 5 est liée à son extrémité supérieure à la caisse C du véhicule.

La tige d'amortisseur 5 a une partie sortant du corps 4 et se termine en partie supérieure par une partie filetée de plus petit diamètre 5a solidaire de la caisse C et à laquelle est fixée, par l'intermédiaire d'un écrou 6, une coupelle 7, un élément en élastomère de filtration de vibrations 8 et un support de suspension 9.

La butée 2 est réalisée en une seule pièce et est constituée par un élément élastique de compression en un matériau élastomère en forme de manchon monté autour du corps 4 de l'amortisseur 3 coaxialement à la tige d'amortisseur 5 dans un bol 10 solidaire du corps 4.

Plus précisément, le manchon constituant la butée de compression 2 comprend une partie inférieure 2a dont la surface latérale interne cylindrique entoure le corps d'amortisseur 4 et la surface latérale externe comporte une portion inférieure tronconique convergeant vers le bas prolongée par une portion supérieure cylindrique. La partie supérieure 2b de la butée de compression 2 comporte une surface latérale interne tronconique divergeant vers le haut et espacée d'une certaine distance de la tige d'amortisseur 5 et une surface latérale externe tronconique convergeant vers le haut. L'extrémité supérieure annulaire active en forme de biseau de la partie 2b de la butée de compression 2 est maintenue en appui sur une coupelle rigide 11 liée à la caisse par l'intermédiaire du support de suspension 9. La coupelle 11 exerce sur la butée de compression 2 une force de compression dirigée parallèlement à l'axe de la tige d'amortisseur 5. Cette coupelle est raccordée à une jupe 12 se prolongeant en partie supérieure par une paroi 13 solidaire du support 9 en forme de cuvette servant d'appui à l'extrémité d'un ressort de suspension 14 dont l'extrémité opposée inférieure est en appui sur une collerette 15 solidaire du corps d'amortisseur 4. Le bloc élastique de liaison 8 constituant l'élément filtrant est fixé par adhérisation au pourtour de la coupelle 7 et à la surface cylindrique interne de la jupe 12.

Le bol 10 de logement de la butée de compression 2 comprend deux parois concentriques respectivement externe 10a et interne 10b raccordées l'une à l'autre en partie inférieure par une paroi annulaire transversale 10c servant d'appui à la butée de compression 2. Les deux parois 10a, 10b sont conformées de façon à définir, en section longitudinale ou verticale, la forme générale d'un U. Plus précisément, la paroi interne 10b est cylindrique et entoure en contact intime la partie supérieure cylindrique du corps d'amortisseur 4 en étant solidarisée à celle-ci par exemple par emmanchement à force, la paroi 10c venant en butée sur une bague cylindrique 16 solidaire du corps d'amortisseur 4. Comme représenté, la bague d'appui 16 est réalisée en une seule pièce avec la collerette 15. La paroi externe 10a du bol 10 est de forme conjuguée à celle de la surface externe de la partie inférieure 2a de la butée de compression 2, c'est-à-dire qu'elle comprend une portion de paroi supérieure cylindrique.

La figure 1 représente en traits mixtes la position du bol 10 lorsque la butée 2 est en compression maximale lors d'un débattement vertical vers le haut de la roue pour absorber de l'énergie et éviter un choc brutal.

Par ailleurs, la butée 2 et le bloc de filtration 8 sont situés respectivement dans deux zones annulaires en prolongement l'une de l'autre et concentriques au corps d'amortisseur 4 permettant ainsi de diminuer les dimensions transversales de l'invention. En outre, la butée 2 et le bloc de filtration 8 sont logés à l'intérieur de l'enveloppe du ressort de suspension 14 ainsi que l'extrémité 5a de la tige d'amortisseur 5 de façon à limiter la longueur totale de l'amortisseur.

Bien entendu, l'invention s'applique également à l'agencement selon lequel le corps de l'amortisseur est solidaire, en partie supérieure de celui-ci, du châssis ou de la caisse du véhicule et la tige, dirigée vers le bas, est solidaire du support de roue correspondant. Dans ce cas, la coupelle 11 de compression de la butée 2 sera solidaire du support de roue.

Le dispositif à butée de limitation de course ci-dessus décrit présente les avantages suivants :
- La butée de compression ne fait plus partie des cotes mortes de l'amortisseur, d'où une amélioration substantielle de la compacité du train comportant une telle butée ;
- Amélioration du découplage entre amortissement et butée de compression par suppression du frottement de la tige sur la butée, en phase de compression et qui se produisait lorsque la butée était montée coaxialement autour de la tige le long de celle-ci, résultant ainsi en une baisse de la transmission des bruits ; et
- La filtration de l'amortisseur n'est plus sollicitée par les efforts de la butée de compression de sorte qu'il en résulte une diminution du dimensionnement de celui-ci, permettant d'en améliorer les performances d'isolation et de réduire l'encombrement ainsi que les coûts.

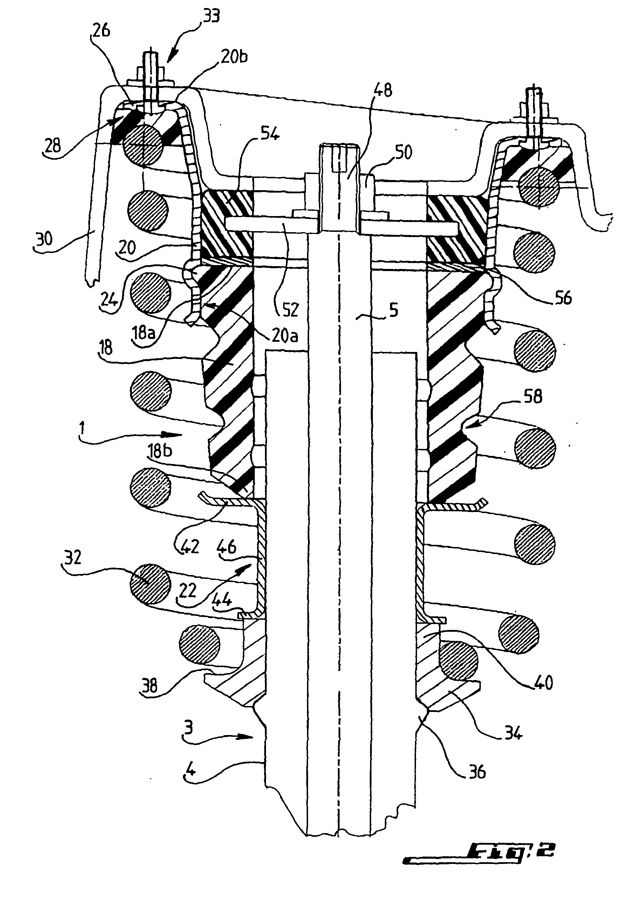

La figure 2 illustre un second mode de réalisation du dispositif de limitation de course selon l'invention, désigné par la référence numérique générale 1 et représenté dans une position supposée verticale.

Comme pour le premier mode de réalisation, il est destiné à constituer un élément d'une suspension de véhicule automobile. Pour ce faire, il est associé à un amortisseur 3 du véhicule, comprenant un corps cylindrique d'amortisseur 4 et une tige d'amortisseur 5 montée coulissante dans le corps 4.

L'amortisseur est destiné à être monté entre la masse suspendue du véhicule, telle que la masse du châssis, et la masse non suspendue, telle que la masse du support de fusée de roue.

A cet effet, la tige 5 d'amortisseur peut soit être liée au châssis du véhicule, tandis que le corps de l'amortisseur est lié au support de fusée de roue, ou être lié au support de fusée de roue, tandis que le corps de l'amortisseur est lié au châssis du véhicule.

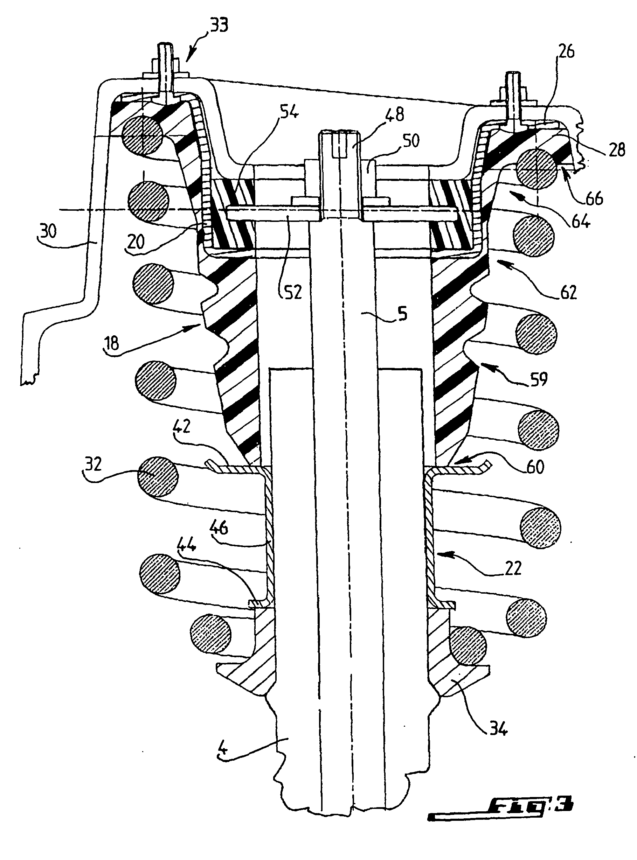

Le mode de réalisation représenté à la figure 2 tout comme celui de la figure 3 concerne le cas où le corps 4 de l'amortisseur est lié, par sa partie inférieure (non représentée) au support de fusée de roue, et la tige d'amortisseur 5 est liée, par son extrémité supérieure, à la caisse du véhicule (non représentée).

Le dispositif de limitation de course est principalement constitué par une butée 18 constituée par un élément élastique de compression réalisé en un matériau élastomère approprié pour l'utilisation envisagée.

Cet élément de compression 18a une forme générale cylindrique et est monté, au moins en partie, autour du corps 4 de l'amortisseur, coaxialement à la tige d'amortisseur 5.

Plus particulièrement, comme cela est visible sur la figure 2, l'élément de compression 18 comporte une première extrémité 18a, ou extrémité supérieure, montée par complémentarité de forme sur une jupe 20 liée au châssis du véhicule et une extrémité opposée 18b, ou extrémité inférieure, en appui sur un élément d'appui 22 agencé de manière à maintenir précontraint l'élément de compression 18.

La première extrémité 18a de l'élément de compression 18 est dotée d'un bourrelet périphérique 24 annulaire en saillie de façon radialement externe qui s'engage dans une gorge annulaire correspondante prévue dans la paroi constitutive de la jupe 20.

Cette jupe 20 est généralement cylindrique et comporte une première zone d'extrémité 20a, inférieure, dans laquelle est ménagée la gorge pour supporter, par complémentarité de forme, l'élément de compression 18 et une zone d'extrémité opposée 20b, supérieure, munie d'un épaulement sensiblement annulaire 26 qui s'engage dans le fond d'une gorge annulaire 28 formée par une cuvette 30 de réception d'une première extrémité d'un ressort de suspension 32 de l'amortisseur 3.

L'épaulement annulaire 26 de la jupe 20 est solidarisé à la cuvette 30 à l'aide de moyens de fixation de type à vis-écrou, tel que 33.

Par ailleurs, l'amortisseur 3 est doté d'une collerette 34 en appui sur un bourrelet périphérique 36 ménagé sur la surface périphérique externe du corps 4 de l'amortisseur.

Cette collerette 34 est munie d'une surface supérieure délimitant un siège 38 sur lequel repose une deuxième extrémité du ressort de suspension 32.

La collerette est également pourvue d'un prolongement cylindrique axial 40 s'étendant vers le haut à partir du siège 38 et dont la tranche d'extrémité supérieure supporte l'élément d'appui 22 pour l'élément de compression 18 formant butée.

Comme on le voit sur la figure 2, cet élément d'appui constitue un manchon entourant le corps 4 de l'amortisseur et est pourvu de deux épaulements annulaires d'extrémité 42 et 44 constituant respectivement une surface d'appui pour l'élément de compression 18 et un pied par lequel il repose sur la collerette 34, et d'une partie médiane 46 constituant une entretoise.

Par ailleurs, la tige d'amortisseur 5 est pourvue d'une partie sortant du corps 4 de l'amortisseur 3 qui se termine, en partie supérieure, par une zone filetée 48 de plus petit diamètre, solidaire de la caisse du véhicule et à laquelle est fixée, par l'intermédiaire d'un écrou 50, une bague annulaire 52. La zone périphérique de cette bague s'insert dans une rainure ménagée dans le bord interne d'un bloc en élastomère de filtration de vibrations 54 qui est placé dans un volume délimité, vers le haut, par la cuvette 30, latéralement par la jupe 20 et vers le bas par une paroi séparatrice 56 soudée sur la jupe 20.

On voit enfin sur la figure 2 que l'élément 18 de compression est doté de rainures périphériques externes et internes, telles que 58, permettant un contrôle de la déformation longitudinale de cet élément.

Comme pour le premier mode de réalisation, la butée 18, le bloc de filtration 54 et l'extrémité 48 de la tige d'amortisseur 5 sont logés dans l'enveloppe du ressort de suspension 32. De plus, la butée 18 et le bloc 54 sont situés respectivement dans deux zones annulaires concentriques au corps d'amortisseur 4 et en prolongement l'une de l'autre. De la sorte, la longueur totale de l'amortisseur s'en trouve limitée tout comme les dimensions transversales de celui-ci.

Comme on le conçoit, lorsque la roue du véhicule est soumise à un débattement vertical maximal vers le haut, la butée de limitation de course adopte une configuration dans laquelle elle est en compression maximale. Ce faisant, elle absorbe l'énergie qui, en son absence, serait transmise aux passagers du véhicule qui subiraient alors un choc brutal.

Le dispositif de limitation de course de ce second mode de réalisation présente les avantages suivants :
- la butée de compensation ne fait plus partie des cotes mortes de l'amortisseur, d'où une amélioration substantielle de la compacité du train comportant une telle butée ;
- amélioration du découplage entre amortissement et butée de compression, par suppression du frottement de la tige sur la butée, en phase de compression, qui se produisait lorsque la butée était montée coaxialement autour de la tige le long de celle-ci, résultant ainsi en une baisse de la transmission des bruits ;
- la filtration de l'amortisseur n'est plus sollicitée par les efforts de la butée de compression de sorte qu'il en résulte une diminution du dimensionnement de celui-ci, permettant d'en améliorer les performances d'isolation et de réduire l'encombrement ainsi que les coûts ;
- le positionnement de la butée en appui sur un élément formant entretoise permet à celle-ci d'adopter une position haute, ce qui supprime les risques d'accumulation de particules entre la butée, la tige et le corps de l'amortisseur.

On notera cependant que l'invention n'est pas limitée au second mode de réalisation décrit.

En effet, selon ce mode de réalisation décrit précédemment en référence à la figure 2, la butée est montée sur une jupe fixée sur une cuvette recevant l'une des extrémités du ressort de suspension.

Il est également possible, comme représenté au mode de réalisation de la figure 2, de conformer la butée 18 de manière qu'elle comporte une première partie 59 de forme générale cylindrique dont une extrémité libre 60, inférieure, est en appui sur l'élément d'appui 22 et dont l'extrémité opposée 62, supérieure, se prolonge par une partie évasée 64 dont l'extrémité libre délimite un épaulement sensiblement annulaire 66 qui vient se monter dans la cuvette 28 et qui est pressé entre la partie annulaire 26 de la jupe 20 et l'extrémité correspondante du ressort de suspension 32. Par ailleurs, selon ce mode de réalisation, la paroi séparatrice servant à délimiter le logement de réception du bloc d'élastomère 54 peut être intégrée à la paroi constitutive de la jupe 20.

Pour réaliser un tel dispositif, il convient de réaliser, par exemple, par moulage, l'élément de compression 18, monter la jupe 20 sur l'élément de compression, et réaliser le bloc de filtration de vibrations par lequel l'élément de compression vient se monter sur la tige de l'amortisseur.

De préférence, l'on réalise simultanément l'élément de compression et le bloc de filtration par moulage d'un élastomère. Dans ce cas, la bague 52 est noyée lors du moulage.

On conçoit dès lors que ce troisième mode de réalisation permet en outre de rendre plus économique la réalisation du dispositif de limitation de course dans la mesure où l'on diminue le nombre de pièces entrant dans sa constitution.

Comme pour les deux modes de réalisation précédents, la butée 18, le bloc 54 et l'extrémité 48 de la tige d'amortisseur se trouvent pratiquement dans l'enveloppe du ressort de suspension 32 pour limiter la longueur totale de l'amortisseur. En outre, la butée 18 et le bloc 54 situé au-dessus de la butée se trouvent respectivement dans deux zones annulaires concentriques au corps d'amortisseur 4 et en prolongement l'une de l'autre.

## Revendications

1. Dispositif de limitation de course pour amortisseur (3) de véhicule automobile, comprenant une butée (2 ; 18) comportant un élément élastique de compression interposé, coaxialement à la tige (5) de l'amortisseur (3), entre le châssis du véhicule auquel est liée la tige (5) de l'amortisseur et le corps (4) de l'amortisseur lié à un support de fusée de roue, ou entre le corps (4) de l'amortisseur lié au châssis et le support de fusée de roue auquel est liée la tige (5) de l'amortisseur, un ressort de suspension (14 ; 32) étant prévu entre le châssis et le corps (4) de l'amortisseur concentriquement à ce dernier, l'élément de compression (2 ; 18) s'étendant au moins en partie autour du corps de l'amortisseur (4) en étant maintenu précontraint relativement au corps de l'amortisseur (4) et un élément en élastomère (8 ; 54) de filtration de vibrations de forme générale cylindrique étant solidarisé à l'extrémité de la tige de l'amortisseur (5), **caractérisé en ce que** l'élément de compression (2 ; 18) et l'élément de filtration (8 ; 54) sont intégralement logés dans l'enveloppe du ressort de suspension (14 ; 32) avec l'élément de filtration (8 ; 54) situé dans une zone annulaire en prolongement de la zone annulaire concentrique dans laquelle se trouve l'élément de compression (2 ; 18).

2. Dispositif selon la revendication 1, **caractérisé en ce que** l'extrémité de la tige de l'amortisseur (5) est également située dans l'enveloppe du ressort de suspension (14 ; 32).

3. Dispositif selon la revendication 1 ou 2, **caractérisé en ce que** l'élément en élastomère (8) est fixé par adhérisation d'une part au pourtour externe d'une coupelle (7) solidaire de l'extrémité (5a) de la tige d'amortisseur (5) et d'autre part à la surface cylindrique interne d'une jupe (12) solidaire d'un support en cuvette (9) servant d'appui au ressort de suspension (14).

4. Dispositif selon l'une des revendications précédentes, **caractérisé en ce que** la butée de compression (2) est disposée autour du corps (4) de l'amortisseur (3) dans un bol (10) solidaire de ce corps et est maintenue précontrainte dans le bol (10) par une coupelle (11) liée au châssis (C) ou au support de roue.

5. Dispositif selon la revendication 4, **caractérisé en ce que** le bol (10) de logement de la butée de compression (2) comprend deux parois concentriques respectivement externe (10a) et interne (10b) raccordées l'une à l'autre par une paroi annulaire transversale (10c) d'appui de la butée de compression (2) de façon à définir approximativement, en section longitudinale, la forme d'un U, la paroi interne (10b) du bol (10) étant solidaire de la surface latérale correspondante du corps (4) de l'amortisseur (3).

6. Dispositif selon l'une des revendications précédentes, **caractérisé en ce que**, lorsque la butée de compression (2) est interposée entre le châssis (C) du véhicule et le corps (4) de l'amortisseur (3), la coupelle de précontrainte (11) de la butée (2) est solidaire d'un support de suspension (9) fixé à la caisse (C), le support de suspension (9) étant l'appui de l'extrémité du ressort de suspension (14) dont l'extrémité opposée prend appui sur une collerette (15) solidaire du corps (4) de l'amortisseur (3).

7. Dispositif selon l'une des revendications précédentes, **caractérisé en ce que** l'extrémité active (2b) de la butée (2) en appui sur la coupelle (11) a une forme annulaire se prolongeant en biseau.

8. Dispositif selon la revendication 1 ou 2, **caractérisé en ce que** l'élément de compression (18) est monté sur un support (20) lié au châssis du véhicule, la butée étant maintenue précontrainte sur le support par un élément d'appui (22) lié au corps ou à la tige de l'amortisseur.

9. Dispositif selon la revendication 8, **caractérisé en ce que** l'élément de compression (18) est généralement cylindrique et est pourvu d'une extrémité (18b) en appui sur ledit élément d'appui et d'une extrémité opposée (18a) montée par complémentarité de forme sur une jupe (20) d'un ressort (32) de suspension de l'amortisseur dont l'extrémité opposée prend appui sur une collerette (34) solidaire du corps ou de la tige.

10. Dispositif selon la revendication 9, **caractérisé en ce que** l'élément de compression est pourvu d'un bourrelet (24) périphérique en saillie de façon radialement externe qui s'engage dans une gorge complémentaire ménagée dans la paroi de la jupe (20).

11. Dispositif selon la revendication 8, **caractérisé en ce que** l'élément de compression (18) comporte une partie (59) généralement cylindrique dont une extrémité (60) est en appui sur ledit élément d'appui et dont l'extrémité opposée (62) se prolonge par une partie évasée (64) dont l'extrémité libre délimite une épaulement (66) sensiblement annulaire monté dans une cuvette de réception d'une extrémité d'un ressort (32) de suspension de l'amortisseur dont l'autre extrémité prend appui sur une collerette (34) solidaire du corps ou de la tige.

12. Dispositif selon la revendication 11, **caractérisé en ce que** la partie évasée (64) est dotée d'un bloc (54) de filtration de vibrations venu de manière par lequel elle se monte sur la tige de l'amortisseur.

13. Dispositif selon l'une quelconque des revendications 9 à 12, **caractérisé en ce que** ledit élément d'appui comporte deux épaulements annulaires d'extrémité (42, 44) mutuellement opposés, l'un en appui sur la collerette et l'autre recevant l'élément de compression, et une partie médiane (46) formant entretoise.

14. Procédé de fabrication d'un dispositif de limitation de course selon l'une quelconque des revendications 8 à 13, **caractérisé en ce qu'**il comporte les étapes consistant à mouler l'élément de compression (18), monter le support (20) sur l'élément de compression, et réaliser un bloc (54) de filtration de vibrations par lequel l'élément de compression vient se monter sur la tige de l'amortisseur, et **en ce que** l'on réalise simultanément l'élément de compression et le bloc de filtration par moulage, une bague (52) de montage de l'élément de compression étant rendue solidaire de l'élément de compression au cours du moulage.

## Claims

1. A travel-limiting device for a shock absorber (3) of a motor vehicle, comprising a stop (2; 18) including an interposed elastic compression member, coaxially to the stem (5) of the shock absorber (3), between the chassis of the vehicle to which the stem (5) of the shock absorber is connected and the body (4) of the shock absorber connected to a wheel axle support, or between the body (4) of the shock absorber connected to the chassis and the wheel axle support to which the stem (5) of the shock absorber is connected, a suspension spring (14; 32) being provided between the chassis and the body (4) of the shock absorber concentrically to the latter, the compression member (2; 18) extending at least partly around the body of the shock absorber (4) while being maintained pre-stressed relatively to the body of the shock absorber (4) and an elastomeric member (8; 54) for filtering vibrations, with a general cylindrical shape, being made integral with the end of the stem of the shock absorber (5), **characterized in that** the compressive member (2; 18) and the filtering member (8; 54) are integrally housed in the enclosure of the suspension spring (14; 32) with the filtering member (8; 54) located in an annular area extending from the concentric annular area in which the compression member (2; 18) is found.

2. The device according to claim 1, **characterized in that** the end of the stem of the shock absorber (5) is also located in the enclosure of the suspension spring (14; 32).

3. The device according to claim 1 or 2, **characterized in that** the elastomeric member (8) is fixed by adhesion to the external periphery of a cup (7) integral with the end (5a) of the shock absorber stem (5) on the one hand and to the internal cylindrical surface of a skirt (12) integral with a cupped support (9) used as support for the suspension spring (14).

4. The device according to any of the preceding claims, **characterized in that** the compression stop (2) is positioned around the body (4) of the shock absorber (3) in a bowl (10) integral with this body and is maintained pre-stressed in the bowl (10) by a cup (11) connected to the chassis (C) or to the wheel support.

5. The device according to claim 4, **characterized in that** the bowl (10) for housing the compression stop (2) comprises two external (10a) and internal (10b) concentric walls respectively, connected to each other by a support transverse annular wall (10c) for the compressive stop (2) so as to approximately define, in a longitudinal section, the shape of a U, the internal wall (10b) of the bowl (10) being integral with the corresponding side surface of the body (4) of the shock absorber (3).

6. The device according to any of the preceding claims, **characterized in that**, when the compression stop (2) is interposed between the chassis (C) of the vehicle and the body (4) of the shock absorber (3), the cup (11) pre-stressing the stop (2) is integral with a suspension support (9) attached to the body shell (C), the suspension support (9) being the support for the end of the suspension spring (14), the opposite end of which is pressed on a flange (15) integral with the body (4) of the shock absorber (3).

7. The device according to any of the preceding claims, **characterized in that** the active end (2b) of the stop (2) pressing on the cup (11) has an annular shape extending with a beveled edge.

8. The device according to claim 1 or 2, **characterized in that** the compression member (18) is mounted on a support (20) connected to the chassis of the vehicle, the stop being maintained pre-stressed on the support by a supporting member (22) connected to the body or to the stem of the shock absorber.

9. The device according to claim 8, **characterized in that** the compression member (18) is generally cylindrical and is provided with an end (18b) pressing on said supporting member and with an opposite end (18a) mounted by shape complementarity on a skirt (20) of a suspension spring (32) of the absorber, the opposite end of which presses on a flange (34) integral with the body or the stem.

10. The device according to claim 9, **characterized in that** the compression member is provided with a peripheral ridge (24) protruding in a radially external way, which engages into a complementary groove provided in the wall of the skirt (20).

11. The device according to claim 8, **characterized in that** the compression member (18) includes a generally cylindrical portion (59), one end (60) of which presses on said supporting member and the opposite end (62) of which is extended by a flared portion (64), the free end of which delimits a substantially annular shoulder (66) mounted in a cup for receiving an end of a suspension spring (32) of the shock absorber, the other end of which presses on a flange (34) integral with the body or to the stem.

12. The device according to claim 11, **characterized in that** the flared portion (64) is provided with a block (54) for filtering vibrations, block by means of which it is mounted on the stem of the shock absorber.

13. The device according to any of claims 9 to 12, **characterized in that** said supporting member includes two mutually opposite end annular shoulders (42, 44), one pressing on the flange and the other receiving the compression member, and a middle portion (46) forming a spacer.

14. A method for manufacturing a travel-limiting device according to any of claims 8 to 13, **characterized in that** it includes steps consisting of molding the compression member (18), of mounting the support (20) on the compression member and of producing a block (54) for filtering vibrations whereby the compression member will be mounted on the stem of the shock absorber, and **in that** the compression member and the filtering block are produced simultaneously by molding, a ring (52) for mounting the compression member being made integral with the compression member during the molding.

## Patentansprüche

1. Vorrichtung zur Wegbegrenzung für einen Stoßdämpfer (3) eines Kraftfahrzeugs, einen Anschlag (2, 18) aufweisend, welcher ein flexibles Kompressionselement umfasst, das koaxial zur Kolbenstange (5) des Stoßdämpfers (3), zwischen dem Chassis des Fahrzeugs, mit dem die Kolbenstange (5) des Stoßdämpfers und der mit einem Radschenkelhalter verbundene Körper (4) des Stoßdämpfers verbunden ist, zwischengelagert ist, oder zwischen dem Körper (4) des mit dem Chassis verbundenen Stoßdämpfers und dem Radschenkelhalter, mit dem die Kolbenstange (5) des Stoßdämpfers verbunden ist, eine Aufhängungsfeder (14, 32), die sich zwischen dem Chassis und dem Stoßdämpferkörper (4) konzentrisch zu diesem befindet, wobei sich das Kompressionselement (2, 18) mindestens teilweise um den Stoßdämpferkörper (4) erstreckt und vorgespannt in bezug zum Stoßdämpferkörper (4) gehalten wird, und ein allgemein zylindrisch geformtes Elastomerelement (8, 54) zur Filtrierung von Schwingungen, das mit dem Ende der Kolbenstange (5) des Stoßdämpfers verbunden ist, **dadurch gekennzeichnet, dass** das Kompressionselement (2, 18) und das Filtrationselement (8, 54) vollständig in der Umhüllung der Aufhängungsfeder (14, 32) platziert sind, wobei sich das Filtrationselement (8, 54) in einem ringförmigen Bereich in Verlängerung des konzentrischen ringförmigen Bereichs befindet, in welchem das Kompressionselement (2, 18) liegt.

2. Vorrichtung nach Anspruch 1, **dadurch gekennzeichnet, dass** sich das Ende der Stoßdämpferkolbenstange (5) ebenfalls in der Umhüllung der Aufhängungsfeder (14, 32) befindet.

3. Vorrichtung nach Anspruch 1 oder 2, **dadurch gekennzeichnet, dass** das Elastomerelement (8) durch Adherisation einerseits am äußeren Umfang einer mit dem Ende (5a) der Stoßdämpferkolbenstange (5) verbundenen Kappe (7) und andererseits mit der zylindrischen Innenfläche eines Mantelelements (12) verbunden ist, das mit einem schüsselförmigen Halter (9) verbunden ist, der die Aufhängungsfeder (14) abstützt.

4. Vorrichtung nach einem der vorhergehenden Ansprüche, **dadurch gekennzeichnet, dass** der Kompressionsanschlag (2) um den Körper (4) des Stoßdämpfers (3) herum in einer mit diesem Körper verbundenen Schale (10) angeordnet ist und vorgespannt in der Schale (10) von einer mit dem Chassis (C) oder dem Radhalter verbundenen Kappe (11) gehalten wird.

5. Vorrichtung nach Anspruch 4, **dadurch gekennzeichnet, dass** die Schale (10) zur Aufnahme des Kompressionsanschlags (2) zwei konzentrische, jeweils äußere (10a) und innere (10b) Wände aufweist, die miteinander durch eine ringförmige Querwand (10c) verbunden sind, die den Kompressionsanschlag (2) derart stützt, so dass im Längsschnitt ungefähr eine U-Form definiert wird, wobei die Innenwand (10b) der Schale (10) mit der entsprechenden Seitenfläche des Körpers (4) des Stoßdämpfers (3) verbunden ist.

6. Vorrichtung nach einem der vorhergehenden Ansprüche, **dadurch gekennzeichnet, dass**, wenn sich der Kompressionsanschlag (2) zwischen dem Chassis (C) des Fahrzeugs und dem Körper (4) des Stoßdämpfers (3) befindet, die Vorspannkappe (11) des Anschlags (2) mit einem am Rahmen (C) befestigten Aufhängungshalter (9) verbunden ist, wobei der Aufhängungshalter (9) das Ende der Aufhängungsfeder (14) abstützt, deren entgegengesetztes Ende sich auf einem gebogenen Rand (15) abstützt, der mit dem Körper (4) des Stoßdämpfers (3) verbunden ist.

7. Vorrichtung nach einem der vorhergehenden Ansprüche, **dadurch gekennzeichnet, dass** das aktive Ende (2b) des sich auf die Kappe (11) stützenden Anschlags (2) eine ringförmige, abgeschrägt verlängernde Form hat.

8. Vorrichtung nach Anspruch 1 oder 2, **dadurch gekennzeichnet, dass** das Kompressionselement (18) an einem mit dem Chassis des Fahrzeugs verbundenen Halter (20) montiert ist, wobei der Anschlag auf dem Halter mittels eines mit dem Körper oder der Stoßdämpferkolbenstange verbundenen Abstützelements (22) vorgespannt gehalten wird.

9. Vorrichtung nach Anspruch 8, **dadurch gekennzeichnet, dass** das Kompressionselement (18) allgemein zylindrisch und mit einem Ende (18b) versehen ist, das sich auf das besagte Abstützelement stützt, und mit einem gegenüberliegenden Ende (18b), das formschlüssig auf einem Mantelelement (20) einer Feder (32) zur Aufhängung des Stoßdämpfers montiert ist, deren gegenüberliegendes Ende sich auf einem mit dem Körper oder der Kolbenstange verbundenen gebogenen Rand (34) abstützt.

10. Vorrichtung nach Anspruch 9, **dadurch gekennzeichnet, dass** das Kompressionselement mit einer peripheren, radial nach außen hervorspringenden Wulst (24) ausgestattet ist, die in einer entsprechenden Auskehlung einrastet, die in die Wand des Mantelelements (20) eingearbeitet ist.

11. Vorrichtung nach Anspruch 8, **dadurch gekennzeichnet, dass** das Kompressionselement (18) einen im allgemeinen zylindrischen Teil (59) aufweist, von dem sich ein Ende (60) auf dem besagten Abstützelement abstützt und dessen gegenüberliegendes Ende (62) sich in einem konisch erweiterten Teil (64) verlängert, dessen freies Ende einen etwa ringförmigen Vorsprung (66) ausbildet, der in einer Aufnahmeschale eines Endes einer den Stoßdämpfer aufhängenden Feder (32) aufgenommen wird, deren anderes Ende sich auf einem mit dem Körper oder der Kolbenstange verbundenen gebogenen Rand (34) abstützt.

12. Vorrichtung nach Anspruch 11, **dadurch gekennzeichnet, dass** der konisch erweiterte Teil (64) mit einem Block (54) zur Filtrierung von Schwingungen ausgestattet ist, der so angebracht ist, dass der Block mit Hilfe des Teils an der Stoßdämpferkolbenstange angebracht ist.

13. Vorrichtung nach einem der Ansprüche 9 bis 12, **dadurch gekennzeichnet, dass** das besagte Abstützelement an seinen Enden zwei ringförmige Vorsprünge (42, 44) umfasst, die sich gegenüberliegen und von denen sich ein Vorsprung auf den gebogenen Rand (34) abstützt und der andere Vorsprung das Kompressionselement aufnimmt, und einen Mittelteil (46), der einen Steg bildet.

14. Verfahren zur Herstellung einer Vorrichtung zur Wegbegrenzung nach einem der Ansprüche 8 bis 13, **dadurch gekennzeichnet, dass** es die Schritte Formen des Kompressionselements (18), Montage des Halters (20) auf dem Kompressionselement und Herstellung eines Blocks (54) zur Filtrierung von Schwingungen, mit dem das Kompressionselement auf der Stoßdämpferkolbenstange montiert wird, umfasst, und **dadurch**, dass das Kompressionselement und der Filtrationsblock gleichzeitig durch Formen hergestellt werden, wobei beim Formen ein Montagering (52) des Kompressionselements mit dem Kompressionselement verbunden wird.
